# FASCICULE DE BREVET EUROPEEN

(11) **EP 3 230 059 B1**
(45) Date de publication et mention de la délivrance du brevet: **17.02.2021**
(21) Numéro de dépôt: 15817976.2
(22) Date de dépôt: 08.12.2015
(51) Int. Cl.: B32B 17/10

(54) **FEUILLETE D'UNE FEUILLE DE MATERIAU POLYMERE EPAIS ET D'UNE FEUILLE DE VERRE MINCE**
LAMINAT EINER DICKEN SCHICHT EINES POLYMERMATERIALS UND EINER DÜNNEN GLASSCHICHT
LAMINATE OF THICK LAYER OF POLYMERIC MATERIAL AND A THIN LAYER OF GLASS

(30) Priorité: 11.12.2014 FR 1462264
(43) Date de publication de la demande: 18.10.2017
(73) Titulaire: SAINT-GOBAIN GLASS FRANCE, 92400 Courbevoie (FR)
(72) Inventeur: ROUBY, Michel, 45460 Bray En Val (FR); CHAUSSADE, Pierre, 45100 Orleans (FR); MATHEY, Gregoire, 78110 Le Vesinet (FR); DESCUSSE, Catherine, 45110 Chateauneuf Sur Loire (FR)
(74) Mandataire: Saint-Gobain Recherche
(86) Numéro de dépôt international: PCT/FR2015/053367
(87) Numéro de publication internationale: WO 2016/092196

(56) Documents cités:
- DE-A1- 4 415 878
- FR-A1- 2 750 075
- US-A- 5 589 272
- US-A1- 2009 246 517
- "Cooler is better", , 1 janvier 2006 (2006-01-01), XP055218864, Extrait de l'Internet: URL:http://www.huntsman.com/polyurethanes/ Media Library/a_MC1CD1F5AB7BB1738E040EBCD2B6B01F 1/Products_MC1CD1F5AB8081738E040EBCD2B6B01 F1/TPU_former_MC1CD1F5B17601738E040EBCD2B6 B01F1/Welcome to the world_MC1CD1F5B17AD1738E040EBCD2B6B01F1/Br ands_MC1CD1F5B180E1738E040EBCD2B6B01F1/Kry stalflex_MC1CD1F5B185B173 [extrait le 2015-10-07]

## Description

L'invention a trait aux vitrages feuilletés constitués d'une feuille de matériau polymère transparent épaisse et d'une feuille de verre minéral mince, collées l'une à l'autre par un intercalaire adhésif.

Le problème spécifique posé par ce type de structure est celui de la dilatation thermique différentielle entre matériau polymère et verre minéral aux températures d'assemblage des feuilletés, appelé effet bilame. La feuille de matériau polymère est collée à la feuille de verre par l'intermédiaire d'un adhésif thermoplastique. Le collage nécessite un chauffage de la température ambiante à 100-120 °C selon la nature du matériau polymère, et de préférence à une température peu supérieure à 80 °C, puis refroidissement à l'ambiante. Au refroidissement, le matériau polymère se rétracte beaucoup plus que le verre mince qui a alors tendance à se déformer en formant des ondulations : on parle aussi de moutonnement. La qualité optique du feuilleté en est bien sûr gravement affectée.

Les inventeurs se sont aperçus que le choix de la nature et de l'épaisseur de l'intercalaire adhésif permettait, dans de très rares cas, de supprimer le moutonnement.

Ce but a donc pu être atteint par l'invention qui en conséquence a pour objet un vitrage essentiellement constitué d'une feuille de matériau polymère transparent de 5 à 25 mm d'épaisseur et d'une feuille de verre d'épaisseur comprise entre 0,5 et 1,5 mm, collées l'une à l'autre par un intercalaire adhésif dont la dureté à température au moins égale à -5 °C est au plus égale à 70 Shore A et dont l'épaisseur est une fonction décroissante de l'épaisseur de la feuille de verre, une épaisseur de 2,5 mm d'intercalaire adhésif suffisant pour une épaisseur de la feuille de verre de 0,55 mm et une épaisseur de 1,25 mm d'intercalaire adhésif suffisant pour une épaisseur de la feuille de verre de 1,25 mm.

On entend par verre, au sens de l'invention, tout type de verre minéral tel que sodocalcique flotté renforcé chimique ou non, aluminosilicate renforcé chimique ou non, avec ou sans alcalins, borosilicate, aluminoborosilicate...

Grâce au bas niveau de dureté et à l'épaisseur importante de l'intercalaire adhésif selon l'invention, on bénéficie d'une surface parfaitement régulière, exempte d'ondulations, de feuilles de verre aussi minces que de 0,5 mm d'épaisseur, feuilletées avec la feuille épaisse de matériau polymère.

Sans difficulté, on est aussi en mesure d'obtenir les qualités habituelles requises des vitrages dans les applications exigeantes comme l'aéronautique, notamment la résistance à des températures ambiantes d'utilisation aussi basses que -40 °C, au choc à l'oiseau, aux indentations - gravillons, la rayure...

Le seuil de -5 °C pour la détermination de la dureté correspond sensiblement à la température minimale atteinte par l'intercalaire adhésif en présence d'un vitrage à couche chauffante.

Selon des caractéristiques préférées du vitrage de l'invention :
- le matériau polymère transparent est choisi parmi le poly(méthacrylate de méthyle) et le polycarbonate ;
- l'épaisseur de la feuille de verre est au plus égale à 1,4 et, par ordre de préférence croissant, 1,3, 1,2, 1,1 et 1,0 mm ;
- l'épaisseur de la feuille de matériau polymère transparent est au plus égale à 20 et, par ordre de préférence croissant, 15 et 12 mm ;
- la face de la feuille de verre orientée vers l'intercalaire adhésif porte une couche chauffante; un exemple en est une couche de 200 nm d'épaisseur d' oxyde d'indium-étain (ou encore oxyde d'indium dopé à l'étain ou ITO pour l'appellation anglaise : Indium Tin Oxide), qui est un oxyde mixte ou un mélange obtenu à partir des oxydes d'indium(III) (In₂O₃) et d'étain (IV) (SnO₂), de préférence dans les proportions massiques comprises entre 70 et 95% pour le premier oxyde et 5 à 20% pour le second oxyde ; une proportion massique typique est d'environ 90 % massique d'In₂O₃ pour environ 10 % massique de SnO₂; grâce à l'épaisseur relativement faible de la feuille de verre, la puissance de chauffage peut être réduite par rapport à celle que nécessiterait la conduction thermique à travers une feuille de verre plus épaisse, fréquemment de 3 mm d'épaisseur par exemple ;
- le ou les intercalaire(s) adhésif(s) sont choisis parmi les polyuréthane thermoplastique, polyvinylbutyral, éthylène/acétate de vinyle, résine telle que résine ionomère ; ils peuvent procurer des fonctionnalités telles que d'isolation acoustique, résistance mécanique accrue, notamment résistance balistique... ;
- ladite feuille de matériau polymère transparent est monolithique ou constituée de plusieurs plis feuilletés ensemble.

L'invention a d'autre part pour objet l'application d'un vitrage tel que décrit ci-dessus pour un véhicule de transport terrestre, aérien ou aquatique, dont la surface en contact avec l'atmosphère extérieure est constituée d'une dite feuille de verre. Celle-ci offre une excellente résistance mécanique, vis-à-vis des rayures, indentations, et constitue une protection de la surface du matériau polymère transparent sous-jacent. Elle garantit la préservation de l'aspect visuel originel de la surface du vitrage, essentiellement exempte de marques, le maintien d'une excellente qualité optique et de transparence.

L'invention sera mieux comprise à la lumière de l'exemple qui suit.

### Exemple

Une feuille de 9 mm d'épaisseur de poly(méthacrylate de méthyle) est collée à une feuille de 0,55 ou 1,25 mm d'épaisseur de verre flotté silicosodocalcique renforcé chimique par un intercalaire adhésif de 1,25 ou 2,5 mm d'épaisseur consistant en polyvinylbutyral compatible avec le PMMA, commercialisé par la Société Saflex sous la marque enregistrée Saflex® PVB DB, ou en polyuréthane thermoplastique commercialisé par la Société Huntsman sous la marque enregistrée Krystalflex® PE 499.

A 20 °C, la dureté de Saflex® PVB DB est de 95 Shore A et celle du TPU Krystalflex® PE 499 est de 65 Shore A.

On assemble six vitrages feuilletés de caractéristiques consignées dans le tableau ci-dessous.

| Echantillon n° | Epaisseur verre mm | Epaisseur PVB mm | Epaisseur TPU mm | Epaisseur PMMA mm |
|---|---|---|---|---|
| 1 | 0,55 | 1,25 | 0 | 9 |
| 2 | 0,55 | 0 | 1,25 | 9 |
| 3 | 0,55 | 2,5 | 0 | 9 |
| 4 | 0,55 | 0 | 2,5 | 9 |
| 5 | 1,25 | 1,25 | 0 | 9 |
| 6 | 1,25 | 0 | 1,25 | 9 |

Ces six feuilletés sont soumis au test lumière polarisé (polariscope plan) qui permet de visualiser les contraintes dans le feuilleté.

Ce test consiste à exposer l'échantillon à une source de lumière polarisée et à observer l'échantillon à travers un filtre polarisé.

Les niveaux de contraintes dans le matériau se traduisent par l'observation de franges de couleurs appelées isochromes.

Un niveau de contrainte nul donne une couleur noire, lorsque les niveaux de contraintes augmentent, les couleurs froides (bleu, vert) diminuent pour laisser la place aux couleurs plus chaudes (jaune, rouge).

Une absence de contraintes n'est observée que pour les vitrages feuilletés 4 et 6. Elle garantit que l'effet bilame décrit ci-dessus ne se produit pas, et que des ondulations des feuilles de verre mince ne sont pas à attendre pour les vitrages feuilletés 4 et 6. Cela est conforme d'ailleurs à l'observation visuelle directe à travers ces vitrages ou à l'ombroscopie : on ne voit en effet aucune ondulation sur les vitrages feuilletés 4 et 6, au contraire des autres vitrages feuilletés.

## Revendications

1. Vitrage essentiellement constitué d'une feuille de matériau polymère transparent de 5 à 25 mm d'épaisseur et d'une feuille de verre d'épaisseur comprise entre 0,5 et 1,5 mm, collées l'une à l'autre par un intercalaire adhésif dont la dureté à température au moins égale à -5 °C est au plus égale à 70 Shore A et dont l'épaisseur est une fonction décroissante de l'épaisseur de la feuille de verre, une épaisseur de 2,5 mm d'intercalaire adhésif suffisant pour une épaisseur de la feuille de verre de 0,55 mm et une épaisseur de 1,25 mm d'intercalaire adhésif suffisant pour une épaisseur de la feuille de verre de 1,25 mm.

2. Vitrage selon la revendication 1, **caractérisé en ce que** le matériau polymère transparent est choisi parmi le poly(méthacrylate de méthyle) et le polycarbonate.

3. Vitrage selon l'une des revendications 1 ou 2, **caractérisé en ce que** l'épaisseur de la feuille de verre est au plus égale à 1,4 mm.

4. Vitrage selon l'une des revendications précédentes, **caractérisé en ce que** l'épaisseur de la feuille de verre est au plus égale à 1,3 mm.

5. Vitrage selon l'une des revendications précédentes, **caractérisé en ce que** l'épaisseur de la feuille de verre est au plus égale à 1,2 mm.

6. Vitrage selon l'une des revendications précédentes, **caractérisé en ce que** l'épaisseur de la feuille de verre est au plus égale à 1,1 mm.

7. Vitrage selon l'une des revendications précédentes, **caractérisé en ce que** l'épaisseur de la feuille de verre est au plus égale à 1,0 mm.

8. Vitrage selon l'une des revendications précédentes, **caractérisé en ce que** l'épaisseur de la feuille de matériau polymère transparent est au plus égale à 20 mm.

9. Vitrage selon l'une des revendications précédentes, **caractérisé en ce que** l'épaisseur de la feuille de matériau polymère transparent est au plus égale à 15 mm.

10. Vitrage selon l'une des revendications précédentes, **caractérisé en ce que** l'épaisseur de la feuille de matériau polymère transparent est au plus égale à 12 mm.

11. Vitrage selon l'une des revendications précédentes, **caractérisé en ce que** la face de la feuille de verre orientée vers l'intercalaire adhésif porte une couche chauffante.

12. Vitrage selon l'une des revendications précédentes, **caractérisé en ce que** le ou les intercalaire(s) adhésif(s) sont choisis parmi les polyuréthane thermoplastique, polyvinylbutyral, éthylène/acétate de vinyle, résine telle que résine ionomère.

13. Vitrage selon l'une des revendications précédentes, **caractérisé en ce que** ladite feuille de matériau polymère transparent est monolithique ou constituée de plusieurs plis feuilletés ensemble.

14. Application d'un vitrage selon l'une des revendications précédentes pour un véhicule de transport terrestre, aérien ou aquatique, dont la surface en contact avec l'atmosphère extérieure est constituée d'une dite feuille de verre.

## Patentansprüche

1. Verglasung, bestehend im Wesentlichen aus einer 5 bis 25 mm dicken Schicht eines transparenten Polymermaterials und einer zwischen 0,5 und 1,5 mm dicken Glasschicht, die miteinander durch eine Klebstoffzwischenschicht verklebt sind, deren Härte bei einer Temperatur von mindestens -5 °C höchstens 70 Shore A beträgt und deren Dicke eine mit der Dicke der Glasschicht abnehmende Funktion ist, wobei eine Dicke von 2,5 mm der Klebstoffzwischenschicht für eine Dicke der Glasschicht von 0,55 mm ausreichend ist und eine Dicke von 1,25 mm der Klebstoffzwischenschicht für eine Dicke der Glasschicht von 1,25 mm ausreichend ist.

2. Verglasung nach Anspruch 1, **dadurch gekennzeichnet, dass** das transparente Polymermaterial aus Poly(methylmethacrylat) und Polycarbonat ausgewählt ist.

3. Verglasung nach einem der Ansprüche 1 oder 2, **dadurch gekennzeichnet, dass** die Dicke der Glasschicht höchstens 1,4 mm beträgt.

4. Verglasung nach einem der vorstehenden Ansprüche, **dadurch gekennzeichnet, dass** die Dicke der Glasschicht höchstens 1,3 mm beträgt.

5. Verglasung nach einem der vorstehenden Ansprüche, **dadurch gekennzeichnet, dass** die Dicke der Glasschicht höchstens 1,2 mm beträgt.

6. Verglasung nach einem der vorstehenden Ansprüche, **dadurch gekennzeichnet, dass** die Dicke der Glasschicht höchstens 1,1 mm beträgt.

7. Verglasung nach einem der vorstehenden Ansprüche, **dadurch gekennzeichnet, dass** die Dicke der Glasschicht höchstens 1,0 mm beträgt.

8. Verglasung nach einem der vorstehenden Ansprüche, **dadurch gekennzeichnet, dass** die Dicke der Schicht eines transparenten Polymermaterials höchstens 20 mm beträgt.

9. Verglasung nach einem der vorstehenden Ansprüche, **dadurch gekennzeichnet, dass** die Dicke der Schicht eines transparenten Polymermaterials höchstens 15 mm beträgt.

10. Verglasung nach einem der vorstehenden Ansprüche, **dadurch gekennzeichnet, dass** die Dicke der Schicht eines transparenten Polymermaterials höchstens 12 mm beträgt.

11. Verglasung nach einem der vorstehenden Ansprüche, **dadurch gekennzeichnet, dass** die der Klebstoffzwischenschicht zugewandte Fläche der Glasschicht eine Heizschicht trägt.

12. Verglasung nach einem der vorstehenden Ansprüche, **dadurch gekennzeichnet, dass** die Klebstoffzwischenschicht oder die Klebstoffzwischenschichten ausgewählt sind aus thermoplastischem Polyurethan, Polyvinylbutyral, Ethylen/Vinylacetat, Harz wie lonomerharz.

13. Verglasung nach einem der vorstehenden Ansprüche, **dadurch gekennzeichnet, dass** die Schicht eines transparenten Polymermaterials monolithisch ist oder aus mehreren miteinander laminierten Lagen besteht.

14. Anwendung einer Verglasung nach einem der vorstehenden Ansprüche für ein Land-, Luft- oder Wassertransportfahrzeug, dessen Oberfläche, die in Kontakt mit der Außenatmosphäre ist, aus einer solchen Glasschicht besteht.

## Claims

1. A glazing essentially consisting of a transparent polymer material sheet having a thickness of from 5 to 25 mm and a glass sheet having a thickness of between 0.5 and 1.5 mm, which are bonded to one another by an adhesive interlayer, the hardness of which at a temperature at least equal to -5°C is at most equal to 70 Shore A and the thickness of which is a decreasing function of the thickness of the glass sheet, an adhesive interlayer thickness of 2.5 mm being sufficient for a glass sheet thickness of 0.55 mm and an adhesive interlayer thickness of 1.25 mm being sufficient for a glass sheet thickness of 1.25 mm.

2. The glazing as claimed in claim 1, **characterized in that** the transparent polymer material is selected from poly(methyl methacrylate) and polycarbonate.

3. The glazing as claimed in either of claims 1 and 2, **characterized in that** the thickness of the glass sheet is at most equal to 1.4 mm.

4. The glazing as claimed in one of the preceding claims, **characterized in that** the thickness of the glass sheet is at most equal to 1.3 mm.

5. The glazing as claimed in one of the preceding claims, **characterized in that** the thickness of the glass sheet is at most equal to 1.2 mm.

6. The glazing as claimed in one of the preceding claims, **characterized in that** the thickness of the glass sheet is at most equal to 1.1 mm.

7. The glazing as claimed in one of the preceding claims, **characterized in that** the thickness of the glass sheet is at most equal to 1.0 mm.

8. The glazing as claimed in one of the preceding claims, **characterized in that** the thickness of the transparent polymer material sheet is at most equal to 20 mm.

9. The glazing as claimed in one of the preceding claims, **characterized in that** the thickness of the transparent polymer material sheet is at most equal to 15 mm.

10. The glazing as claimed in one of the preceding claims, **characterized in that** the thickness of the transparent polymer material sheet is at most equal to 12 mm.

11. The glazing as claimed in one of the preceding claims, **characterized in that** the face of the glass sheet oriented toward the adhesive interlayer bears a heating layer.

12. The glazing as claimed in one of the preceding claims, **characterized in that** the adhesive interlayer(s) is (are) selected from thermoplastic polyurethane, polyvinyl butyral, ethylene/vinyl acetate and a resin such as an ionomer resin.

13. The glazing as claimed in one of the preceding claims, **characterized in that** said transparent polymer material sheet is monolithic or consists of several plies laminated together.

14. An application of a glazing as claimed in one of the preceding claims for a terrestrial, airborne or water-borne transport vehicle, the surface of which in contact with the external atmosphere consists of one said glass sheet.
